# EUROPEAN PATENT SPECIFICATION

(11) **EP 3 800 075 B1**
(45) Date of publication and mention of the grant of the patent: **06.12.2023**
(21) Application number: 19159148.6
(22) Date of filing: 25.02.2019
(51) Int. Cl.: B60D 1/64, B62D 63/08

(54) **EQUIPMENT FOR SERVICES INTERCONNECTIONS OF TRACTOR-TRAILER COMBINATIONS**
VORRICHTUNG FÜR SERVICEVERBINDUNGEN VON TRAKTOR-ANHÄNGER-KOMBINATIONEN
ÉQUIPEMENT POUR INTERCONNEXIONS DES SERVICES DE COMBINAISONS TRACTEUR-REMORQUE

(43) Date of publication of application: 07.04.2021
(73) Proprietor: Fluid Power Design Limited, Grantham, Lincolnshire NG31 7LE (GB)
(72) Inventor: Turley, Edward Paul, Peterborough, Cambridgeshire PE8 6XH (GB)
(74) Representative: Loven, Keith James

(56) References cited:
- EP-A2- 0 853 033
- GB-A- 2 507 802
- GB-A- 2 553 904

## Description

This invention relates to equipment for services interconnections of tractor-trailer combinations. The document GB 2507802 A discloses such equipment for services interconnections of tractor-trailer combinations.

The invention is defined by the appended claims. Equipment of this nature is conventionally mounted on the front of the trailer for use in establishing services interconnection between the tractor and trailer when the trailer is coupled to the tractor. The services interconnection is established to the interconnection equipment on the front of the trailer via individual electrical, pneumatic-hose and other flexible connector lines that extend (normally in extendable-coil form) from the back of the driver's cab or other location of the tractor to be plugged into sockets or otherwise connected to the interconnection equipment when the tractor and trailer are coupled together.

In order to avoid the necessity for the driver or other person when connecting or disconnecting the interconnection, to clamber onto the tractor-trailer combination between the tractor and the trailer, it is common for the sockets and other connectors of the interconnection equipment to be mounted on a moveable services-connector plate. The plate is retained in a central, 'normal' or `running' location when the tractor-trailer is moving or is parked, but is moveable laterally from this location across the front of the trailer into an `extended', or 'deployed' location to one side of the trailer whenever connections to it are to be established or otherwise changed. This makes the connector-plate more readily accessible to the driver or other person without requiring them to clamber or lean excessively into the space between the tractor and trailer to make the change. More especially, the services-connector plate may be mounted on a beam or other member which is slidable or otherwise moveable relative to the mounting of the equipment to locate the plate outwardly, and desirably downwardly, beyond the side of the tractor-trailer combination at a height and distance that affords the driver or other person ground-access, that is to say, in which they are enabled comfortable and ready-access to the connector-plate while standing on the ground alongside the tractor-trailer combination.

It is an object of the present invention to provide improved equipment for services interconnection of a tractor-trailer combination that may be used with advantage in the above context.

According to the present invention, there is provided equipment for services interconnection of a tractor-trailer combination, wherein a connector-plate of the services interconnection is carried by a moveable beam that is mounted on the trailer and is slidable along a rail-defined path between a retracted condition in which the connector-plate is located over the front face of the trailer intermediate the sides of the trailer, and a deployed condition in which the connector-plate is located projecting beyond one of the trailer sides to afford ground-access, and wherein the rail-defined path is defined by at least one curved rail along which the beam slides.

The rail-defined path of the equipment of the present invention may be defined by a single curved rail or by two curved concentric rails. More particularly, in the circumstances where the rail-defined path of the beam is defined by two curved rails, the two rails may be concentric rails of circular arcuate form, and the beam may be confined to the rail-defined path by two bearings carried by the beam to run on the two rails respectively. One of the bearings may be located at an end of the beam remote from the connector plate, whereas the other bearing may be located on the beam intermediate the connector plate and this remote end of the beam.

In the circumstances where the path is defined by a single rail, the single rail may be of a circular arcuate form, and the beam may then be confined to the rail-defined path by two bearings carried by the beam, both to run along the single rail.

Equipment in accordance with the present invention will now be described by way of example, with reference to the accompanying drawings, in which:
Figure 1 is illustrative of equipment according to the invention involving two concentric rails of circular arcuate form, in a fully-retracted condition;
Figure 2 is illustrative to a reduced scale of the equipment of Figure 1 in its deployed condition for ground-access;
Figure 3 is illustrative of part of alternative equipment according to the invention involving a single rail of circular arcuate form; and
Figure 4 is illustrative to a reduced scale of the equipment of Figure 3 in a deployed condition.

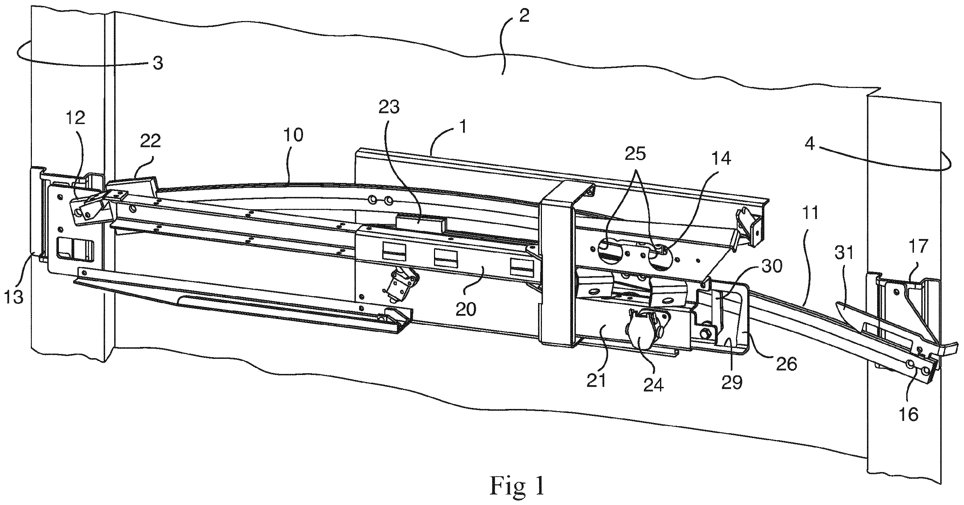

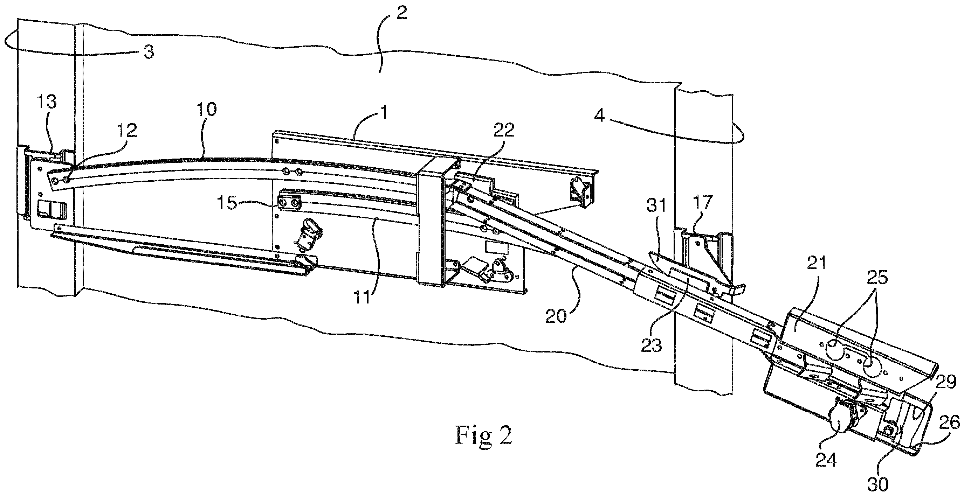

Referring to Figures 1 and 2, the equipment in this example is carried on a mounting-plate 1 that is secured to the front wall 2 of the trailer between side walls 3 and 4 of the trailer. The plate 1 carries two concentric rails 10 and 11 of circular arcuate form. The upper rail 10 of the two rails 10 and 11 has a distal end 12 secured to a mounting bracket 13 that is welded to the front wall 2, and a proximal end 14 (see Figure 1) secured to the mounting-plate 1. The lower rail 11 is offset lengthwise with respect to the upper rail 10, with its distal end 15 (see Figure 2) secured to the mounting-plate 1 and its proximal end 16 secured to a mounting bracket 17 (see Figure 1) welded to the front wall 2.

An elongate straight beam 20 carries the connector-plate 21 of the equipment, and two bearings 22 and 23 that run on the two rails 10 and 11 respectively. The connector-plate 21 incorporates five or more electrical sockets and connectors required for establishing interconnection of the trailer electrically and pneumatically with its tractor; only a representative single electrical socket having a covering flap 24 is shown in Figures 1 and 2 together with apertures 25 in the connector-plate 21 for the mounting on the plate 21 of others of the sockets and connectors required.

A handle 26 is incorporated with the plate 21 for use in drawing the beam 20 manually from its retracted condition towards deployment with the plate 20 projecting beyond the side wall 3 of the trailer to give ground-access. The handle 26 is associated with a lock (not shown) that is active between the mounting-plate 1 and connector-plate 21 to retain the beam 20 in its fully-retracted condition illustrated in Figure 1. The retaining lock is effective to hold the plate 21, and with it the beam 20, from movement from the fully-retracted condition during normal transportation travel of the tractor-trailer combination.

When the tractor-trailer combination is stationary, the driver or other person operating the equipment, can deploy the connector-plate 21 with ground-access to enable engagement or disengagement of the electrical and pneumatic interconnections with the tractor while standing on the ground to one side of the trailer. This is achieved manually by gripping the handle 26 and pulling it laterally outwards towards the mounting bracket 17 of the trailer. With the hand entered through the aperture 29 of the handle 26, grip of the handle 26 includes grasp also of a lever arm 30 of the retaining lock, that projects into the aperture 29. This deflects the arm 30 to release the lock so that the connector-plate 21 with the beam 20 can be pulled laterally outwards into full deployment of the beam 20 and thereby locate the plate 21 with the driver or other operator standing on the ground to the side 4 of the trailer.

As the beam 20 moves into the fully-deployed condition, the bearing 23 of the lower rail 11 is engaged under a latching lever 31 that is pivoted to the bracket 17 (see Figure 2). This engagement retains the beam 20 against movement out of the deployed condition under forces to which the connector-plate 21 is subjected during connections and/or disconnections made with it by the driver or other operator while the beam 20 is fully deployed.

The beam 20 with the plate 21 can be returned from the deployed condition to the fully retracted condition, by manual deflection of the latching lever 31 to release the beam 20. This allows the beam 20 and the connector-plate 21 to be slid back manually on the rails 10 and 11 into the condition represented in Figure 1. The restraining lock re-engages to hold the beam 20, and with it the plate 21, from movement out of the fully retracted condition during movement and travel of the tractor-trailer combination.

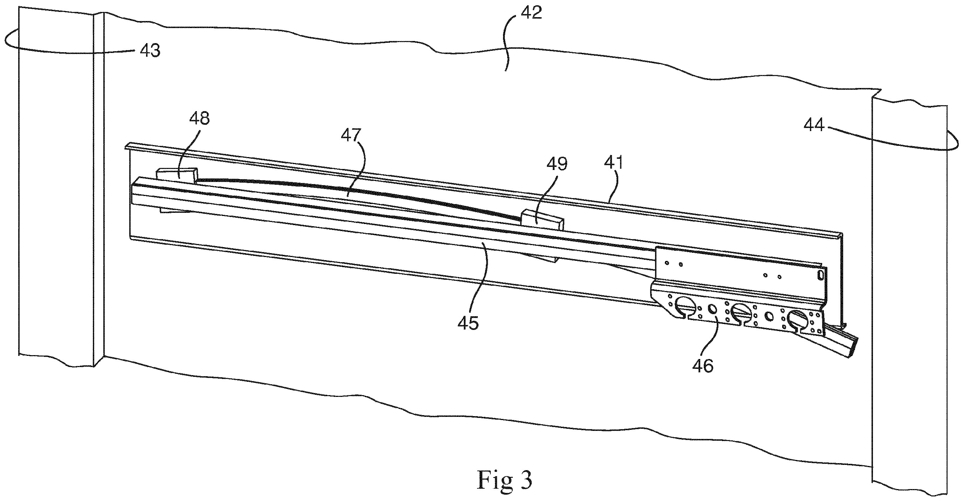

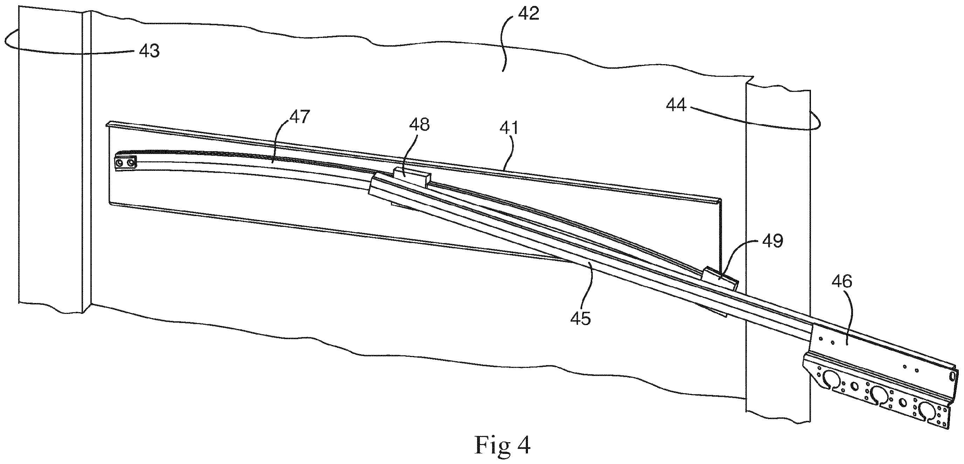

The equipment of Figures 1 and 2 involves two rails of circular arcuate form that are concentrically mounted, and the path of the beam 20 in its movement into the fully-deployed condition from the fully-retracted condition, is similarly a circular arc concentric with the rails 10 and 11. However, equipment in accordance with the present invention having a corresponding circular arcuate path for the movement of the beam can be achieved with the involvement of a single rail of circular arcuate form with which movement of the beam 20 is concentric. An embodiment of equipment in accordance with this invention using a single rail of circular arcuate form, will now be described with reference to Figures 3 and 4.

Referring to Figures 3 and 4, the equipment in this example is carried on a mounting-plate 41 that is secured to the front-wall 42 of a trailer, between its sidewalls 43 and 44. A straight beam 45 in this case carries a connector-plate 46 and is mounted on a single circularly curved rail 47 by two sliding bearings 48 and 49. The connector-plate 46 and the beam 45 are retained in the fully-retracted condition illustrated in Figure 3 by a retaining lock (not shown) associated with a handle (not shown) corresponding to the handle 26 of the equipment of Figures 1 and 2, that is active to retain the beam 45 fully-retracted. The retaining lock is effective to hold the plate 46, and with it the beam 45, from movement from the fully-retracted condition during normal transportation travel of the tractor-trailer combination.

Release of the retaining lock allows the connector-plate 46 with the beam 40 to be pulled outwardly into the deployed condition shown in Figure 4 where the driver or other operator can gain access to the plate 41 while standing on the ground. A latching lever (not shown) corresponding to the latching lever 31 of the equipment of Figures 1 and 2 holds the beam 45 in the deployed condition, until the lever is deflected to release the beam 45 for sliding back to be retained locked in the fully-retracted condition.

The equipment of the present invention has advantage in enabling the use of a straight beam with a single curved, or two concentrically curved slide rails, which are connected to the beam via slideable bearings (22 and 23 in Figures 1 and 2; 48 and 49 in Figures 3 and 4). There is benefit over the previous equipment-designs in that by using a single rail curved at a constant radius, or two concentrically curved rails, the intercoupling outlets/inlets move in a perfect arc concentric with each rail as the equipment is deployed for ground-access coupling. This has the effect that there is no rotation of the beam (20 Figures 1 and 2; 45 Figures 3 and 4) about the bearings, and consequently that the beam can be securely fastened to the bearings by one or more fasteners, and more especially that these fasteners can be fully tightened with no need to design-in any form of rotary-bearing system on each fastener.

Furthermore, the shape of the arc of the rail or rails has benefit over some previous designs as most trailers have a skid-ramp which protrudes forward of the front-wall of the trailer, and these previous designs of ground-access coupling systems have to be mounted on the trailer at a height that ensures the intercoupling outlets/inlets and the connector-plate on which they are mounted, passes clear of the skid-ramp as they extend out and down past the side of the trailer during deployment for ground-access. By arcing the shape of the path of travel, as occurs with both embodiments of the invention described above, there is improved clearance for the intercoupling outlets/inlets and the connector-plate, as they pass the skid-ramp, and as a result equipment according to the present invention, can be mounted in a lower position on the front wall of the trailer than with previously-known designs. Since an objective of the equipment of the present invention is in part to bring the intercoupling outlets/inlets to a comfortable deployed height for the driver to establish and release the intercoupling while standing on the ground, there is a significant advantage in being able to mount the equipment lower than otherwise possible.

Another main advantage of equipment according to the invention is the significantly lower overall height of the equipment itself, especially when two concentric rails are used. Through experimentation, it has been possible to reduce the overall height of the equipment by 25% compared with a design that uses two straight rails with a straight beam arm that pivots about each bearing, while still achieving an identical position for the intercoupling outlets/inlets relative to ground level and the side of the trailer, when the equipment is deployed.

## Claims

1. Equipment for services interconnection of a tractor-trailer combination, in which a connector-plate ( 21; 46) of the services interconnection is carried by a moveable beam ( 20:45) that is mounted on the trailer and is slidable along a rail-defined path (10,11;47) between a retracted condition in which the connector-plate (21;46) is located over the front face ( 2; 42) of the trailer intermediate the sides (3,4;43, 44) of the trailer, and a deployed condition in which the connector-plate (21;46) is located projecting beyond one of the sides (4: 44) of the trailer to afford ground-access, **characterized in that** the rail-defined path is defined by at least one curved rail (10,11:47) along which the beam (20;45) slides.

2. Equipment according to claim 1 wherein the rail-defined path of the equipment is defined by two curved rails (10,11).

3. Equipment according to claim 2 wherein the two rails (10,11) are parallel to one another

4. Equipment according to claim 2 wherein the two rails are concentric rails of circular arcuate form (10,11).

5. Equipment according to any one of claims 2 to 4 wherein the beam (20) is confined to the rail-defined path by two bearings ( 22, 23) carried by the beam (20), and the two bearings ( 22, 23) run on the two rails (10,11) respectively.

6. Equipment according to claim 5 wherein a first of the two bearings (22) carried by the beam (20) is located at an end of the beam ( 20) remote from the connector-plate (21).

7. Equipment according to claim 6 wherein the second of the two bearings (23) is located on the beam (20) intermediate the connector-plate (21) and said remote end of the beam (20).

8. Equipment according to any one of claims 2 to 7 wherein the two rails (10,11) are offset lengthwise with respect to one another.

9. Equipment according to claim 1 wherein the rail-defined path of the beam (45) is defined by a single curved rail (47).

10. Equipment according to claim 9 wherein the single rail (47) is of circular arcuate form

11. Equipment according to claim 9 or claim 10 wherein the beam (45) carries two bearing ( 48,49) that run on the single rail (47).

12. Equipment according to claim 11 wherein a first of the two bearings (48) carried by the beam is located at an end of the beam (45) remote from the connector-plate (46).

13. Equipment according to claim 12 wherein the second of the two bearings (49) is located on the beam (45) intermediate the connector-plate (46) and said remote end of the beam (45).

14. Equipment according to any one of claims 1 to 13 wherein the beam is a straight beam ( 20;45).

15. Equipment according to any one of claims 1 and 14 wherein the beam (20;45) is releasbly-lockable from movement in both the retracted and deployed conditions.

## Patentansprüche

1. Vorrichtung zur Servicesverbindung einer Traktor-Anhänger-Kombination, bei der eine Verbindungsplatte (21; 46) der Servicesverbindung von einem bewegbaren Träger (20; 45) getragen wird, der an dem Anhänger montiert ist und entlang einer durch eine Schiene definierten Bahn (10, 11; 47) zwischen einem eingefahrenen Zustand, in dem sich die Verbindungsplatte (21; 46) über der Vorderseite (2; 42) des Anhängers zwischen den Seiten (3, 4; 43, 44) des Anhängers befindet, und einem ausgefahrenen Zustand, in dem die Verbindungsplatte (21; 46) angeordnet ist, um über eine der Seiten (4: 44) des Anhängers vorzustehen, um Zugang vom Boden zu ermöglichen, **dadurch gekennzeichnet, dass** die durch die Schiene definierte Bahn durch mindestens eine gebogene Schiene (10, 11; 47) definiert ist, entlang der der Träger (20; 45) gleitet.

2. Vorrichtung nach Anspruch 1, wobei die von der Schiene definierte Bahn der Vorrichtung durch zwei gebogene Schienen (10, 11) definiert ist.

3. Vorrichtung nach Anspruch 2, wobei die beiden Schienen (10, 11) parallel zueinander sind.

4. Vorrichtung nach Anspruch 2, wobei die beiden Schienen konzentrische Schienen von kreisbogenförmiger Form (10, 11) sind.

5. Vorrichtung nach einem der Ansprüche 2 bis 4, bei der Träger (20) durch zwei vom Träger (20) getragene Lager (22, 23) auf der von der Schiene definierten Bahn gehalten wird und die beiden Lager (22, 23) entsprechend auf den beiden Schienen (10, 11) laufen.

6. Vorrichtung nach Anspruch 5, wobei sich ein erstes der beiden vom Träger (20) getragenen Lager (22) an einem von der Verbindungsplatte (21) entfernten Ende des Trägers (20) befindet.

7. Vorrichtung nach Anspruch 6, wobei das zweite der beiden Lager (23) an dem Träger (20) zwischen der Verbindungsplatte (21) und dem entfernten Ende des Trägers (20) angeordnet ist.

8. Vorrichtung nach einem der Ansprüche 2 bis 7, wobei die beiden Schienen (10, 11) in Längsrichtung zueinander versetzt sind.

9. Vorrichtung nach Anspruch 1, bei dem die von der Schiene definierte Bahn des Trägers (45) durch eine einzige gebogene Schiene (47) definiert ist.

10. Vorrichtung nach Anspruch 9, wobei die einzelne Schiene (47) eine kreisbogenförmige Form aufweist.

11. Vorrichtung nach Anspruch 9 oder 10, wobei der Träger (45) zwei Lager (48, 49) trägt, die auf der einzelnen Schiene (47) laufen.

12. Vorrichtung nach Anspruch 11, bei dem ein erstes der beiden von dem Träger getragenen Lager (48) an einem von der Verbindungsplatte (46) entfernten Ende des Trägers (45) angeordnet ist.

13. Vorrichtung nach Anspruch 12, wobei das zweite der beiden Lager (49) an dem Träger (45) zwischen der Verbindungsplatte (46) und dem entfernten Ende des Trägers (45) angeordnet ist.

14. Vorrichtung nach einem der Ansprüche 1 bis 13, wobei der Träger ein gerader Träger (20; 45) ist.

15. Vorrichtung nach einem der Ansprüche 1 und 14, wobei der Balken (20; 45) sowohl im eingefahrenen als auch im ausgefahrenen Zustand gegen Bewegung lösbar verriegelbar ist.

## Revendications

1. - Équipement pour l'interconnexion de services d'une combinaison tracteur-remorque, dans lequel une plaque de connexion (21 ; 46) de l'interconnexion de services est portée par une poutre mobile (20 ; 45) qui est montée sur la remorque et est apte à coulisser le long d'un trajet défini par rail (10, 11 ; 47) entre un état rétracté dans lequel la plaque de connexion (21 ; 46) est si tuée au-dessus de la face avant (2 ; 42) de la remorque entre les côtés (3, 4 ; 43, 44) de la remorque, et un état déployé dans lequel la plaque de connexion (21 ; 46) est située en saillie au-delà de l'un des côtés (4 ; 44) de la remorque pour permettre un accès au sol, **caractérisé par le fait que** le trajet défini par rail est défini par au moins un rail incurvé (10, 11 ; 47) le long duquel la poutre (20 ; 45) coulisse.

2. - Équipement selon la revendication 1, dans lequel le trajet défini par rail de l'équipement est défini par deux rails incurvés (10, 11).

3. - Équipement selon la revendication 2, dans lequel les deux rails (10, 11) sont parallèles l'un à l'autre.

4. - Équipement selon la revendication 2, dans lequel les deux rails sont des rails concentriques en forme d'arc de cercle (10, 11).

5. - Équipement selon l'une quelconque des revendications 2 à 4, dans lequel la poutre (20) est confinée au trajet défini par rail par deux paliers (22, 23) portés par la poutre (20), et les deux paliers (22, 23) roulent sur les deux rails (10, 11), respectivement.

6. - Équipement selon la revendication 5, dans lequel un premier des deux paliers (22) portés par la poutre (20) est situé à une extrémité de la poutre (20) à distance de la plaque de connexion (21).

7. - Équipement selon la revendication 6, dans lequel le second des deux paliers (23) est situé sur la poutre (20) entre la plaque de connexion (21) et ladite extrémité distante de la poutre (20).

8. - Équipement selon l'une quelconque des revendications 2 à 7, dans lequel les deux rails (10, 11) sont décalés l'un par rapport à l'autre dans la direction de longueur.

9. - Équipement selon la revendication 1, dans lequel le trajet défini par rail de la poutre (45) est défini par un unique rail incurvé (47).

10. - Équipement selon la revendication 9, dans lequel l'unique rail (47) est en forme d'arc de cercle.

11. - Équipement selon la revendication 9 ou la revendication 10, dans lequel la poutre (45) porte deux paliers (48, 49) qui se déplacent sur l'unique rail (47).

12. - Équipement selon la revendication 11, dans lequel un premier des deux paliers (48) portés par la poutre est situé à une extrémité de la poutre (45) à distance de la plaque de connexion (46).

13. - Équipement selon la revendication 12, dans lequel le second des deux paliers (49) est situé sur la poutre (45) entre la plaque de connexion (46) et ladite extrémité distante de la poutre (45).

14. - Équipement selon l'une quelconque des revendications 1 à 13, dans lequel la poutre est une poutre droite (20 ; 45) .

15. - Équipement selon l'une quelconque des revendications 1 et 14, dans lequel la poutre (20 ; 45) est apte à être verrouillée de manière libérable vis-à-vis de tout mouvement à la fois dans l'état rétracté et dans l'état déployé.
